# EUROPÄISCHE PATENTSCHRIFT

(11) **EP 3 375 564 B1**
(45) Veröffentlichungstag und Bekanntmachung des Hinweises auf die Patenterteilung: **22.04.2020**
(21) Anmeldenummer: 17161654.3
(22) Anmeldetag: 17.03.2017
(51) Int. Cl.: B23Q 11/10, A61C 13/00

(54) **WERKZEUGMASCHINE UND VERFAHREN ZUM BETREIBEN EINER WERKZEUGMASCHINE**
MACHINE TOOL AND METHOD FOR OPERATING SAME
MACHINE-OUTIL ET SON PROCÉDÉ DE FONCTIONNEMENT

(43) Veröffentlichungstag der Anmeldung: 19.09.2018
(73) Patentinhaber: Huber, Martin, 5452 Pfarrwerfen (AT); Wörmer, Alfons, 5500 Bischofshofen (AT)
(72) Erfinder: Huber, Martin, 5452 Pfarrwerfen (AT); Wörmer, Alfons, 5500 Bischofshofen (AT)
(74) Vertreter: Splanemann

(56) Entgegenhaltungen:
- EP-A1- 2 394 767
- EP-A1- 2 520 396
- EP-A1- 3 081 331
- DE-A1-102012 104 263
- JP-A- H01 140 967
- US-A1- 2011 250 827

## Beschreibung

Die Erfindung betrifft eine Werkzeugmaschine. Die Erfindung betrifft des Weiteren ein Verfahren zum Betreiben einer Werkzeugmaschine.

Werkzeugmaschinen, insbesondere dentale Fräsmaschinen oder Drehfräsmaschinen, mit einer Spindel für die Aufnahme eines Werkzeugs und einem Arbeitsarm für die Aufnahme eines Werkstücks und mit mindestens einer Düse, die an der Spindel angebracht ist, insbesondere mit ihrer Austrittsrichtung im Wesentlichen parallel zur Drehachse der Spindel, gelten als bekannt, siehe z.B. die EP 3 081 331 A1.

Die DE 16 90 554 offenbart eine Werkzeugmaschine zur gleichzeitigen elektrochemischen Bearbeitung mehrerer bereits vorausgehend bearbeiteter Oberflächen eines elektrisch leitenden Werkstücks mit den zu bearbeitenden Oberflächen entsprechenden, elektrisch leitenden Werkzeugen, wobei die Wirkflächen jedes Werkzeugs aus zwei aneinander angrenzenden Abschnitten bestehen, von denen der zuerst zur Wirkung kommende Abschnitt in Vorschubrichtung zur Anpassung an die elektrochemische Abtragung von der entsprechenden Oberfläche des Werkstücks geneigt ist und der andere sich daran anschließende Abschnitt parallel zur Vorschubrichtung der Werkzeuge verläuft und dass eine Isolation an jedem Werkzeug angrenzend an den zuletzt genannten Abschnitt vorgesehen ist.

Des Weiteren offenbart die DE 22 45 089 ein Gerät zum Reinigen von Werkzeugmaschinen und dergleichen mit einem luftdichten, mit einem oberen abnehmbaren Deckel verschlossenen Behälter, in dem ein durchlochter Korb zum Auffangen von festen Teilen, z.B. Metallspänen, angeordnet ist, einer an dem Behälter angeschlossenen Saugpumpe, einem Mehrwegeventil, mit dem wahlweise die Saugseite und die Druckseite der Pumpe an den Behälter anschließbar ist, einem oberhalb des Korbes an dem Behälter angeschlossenen Saugschlauch, der mit einem Absperrventil verschließbar ist, und einem Entleerungsschlauch, der an eine in der Nähe des Behälterbodens mündende Öffnung angeschlossen ist, wobei der Behälter eine senkrecht stehende Längsachse aufweist und über seine gesamte Länge einen gleichbleibenden, vorzugsweise kreisförmigen Querschnitt hat, dass das Mehrwegeventil und das Absperrventil seitlich an den Behälter angebaut sind und dass seitlich am Behälter in der Nähe des Behälterbodens ein Anschluss für den Entleerungsschlauch angeordnet ist.

Der Erfindung liegt somit die Aufgabe zugrunde, eine verbesserte Werkzeugmaschine sowie ein verbessertes Verfahren zum Betreiben einer Werkzeugmaschine bereitzustellen, welche eine effektive Reinigung einer Arbeitskammer der Werkzeugmaschine ermöglichen.

Die Erfindung wird mit einer Werkzeugmaschine mit den Merkmalen des Patentanspruchs 1 gelöst. Die Aufgabe wird des Weiteren mit einem Verfahren zum Betreiben einer Werkzeugmaschine mit den Merkmalen des Patentanspruchs 15 gelöst.

### Offenbarung der Erfindung

Die vorliegende Erfindung schafft eine Werkzeugmaschine, insbesondere dentale Fräsmaschine oder Drehfräsmaschine, mit einer Spindel für die Aufnahme eines Werkzeugs und einem Arbeitsarm für die Aufnahme eines Werkstücks und mit mindestens einer Düse, die an der Spindel angebracht ist, insbesondere mit ihrer Austrittsrichtung im Wesentlichen parallel zur Drehachse der Spindel, wobei ein Ablenkkörper in die Spindel eingespannt ist, der sich mindestens teilweise vor der Düse erstreckt.

Die vorliegende Erfindung schafft des Weiteren ein Verfahren zum Betreiben einer Werkzeugmaschine, insbesondere einer dentalen Fräsmaschine oder Drehfräsmaschine. Das Verfahren umfasst ein Bereitstellen einer Spindel für die Aufnahme eines Werkzeugs und eines Arbeitsarms für die Aufnahme eines Werkstücks. Das Verfahren umfasst überdies ein Bereitstellen mindestens einer Düse, die an der Spindel angebracht ist, insbesondere mit ihrer Austrittsrichtung im Wesentlichen parallel zur Drehachse der Spindel. Das Verfahren umfasst darüber hinaus ein Bereitstellen eines Ablenkkörpers, welcher in die Spindel eingespannt ist, der sich insbesondere mindestens teilweise vor der Düse erstreckt. Das Verfahren umfasst zusätzlich ein Beaufschlagen des Ablenkkörpers mit einem durch die mindestens eine Düse austretenden Fluid.

Eine Idee der vorliegenden Erfindung ist es, durch das Vorsehen des Ablenkkörpers, welcher an der Spindel angebracht oder in diese eingespannt ist und welcher vor der Düse angeordnet ist, es zu ermöglichen, dass der Ablenkkörper durch das aus der mindestens einen Düse austretende Fluid derart beaufschlagbar ist, dass eine Ablenkung des Fluids in bestimmte Regionen der Arbeitskammer der Werkzeugmaschine zur effektiven Reinigung der Arbeitskammer der Werkzeugmaschine ermöglicht wird.

Vorteilhafte Ausführungsformen und Weiterbildungen ergeben sich aus den Unteransprüchen sowie aus der Beschreibung unter Bezugnahme auf die Figuren. Gemäß einer bevorzugten Weiterbildung ist vorgesehen, dass mindestens zwei Düsen an der Spindel angebracht sind, deren Austrittsrichtung schräg aufeinander zuweist und insbesondere zur Drehachse der Spindel hinweist. Aufgrund der Schrägstellung der Düsen kann in vorteilhafter Weise erreicht werden, dass ein Auftreffwinkel eines Fluidstrahls auf den Ablenkkörper entsprechend jeweiliger Anforderungen einstellbar ist.

Gemäß einer weiteren bevorzugten Weiterbildung ist vorgesehen, dass der Ablenkkörper drehbar gelagert ist und dass er aus den Düsen austretende Reinigungsflüssigkeit ablenkt, und wobei der Ablenkkörper als Deflektor wirkt und bei seiner Drehung auf ihn auftreffende Reinigungsflüssigkeit insbesondere mindestens teilweise in Richtung seiner Drehung ablenkt. Aufgrund der Wirkung des Ablenkkörpers als Deflektor in Kombination mit dessen Drehung um seine Drehachse kann die auf ihn auftreffende Reinigungsflüssigkeit somit in vorteilhafter Weise derart in die Arbeitskammer der Werkzeugmaschine abgelenkt werden, dass eine gleichmäßige Verteilung der Reinigungsflüssigkeit in der Arbeitskammer der Werkzeugmaschine ermöglicht wird.

Gemäß einer weiteren bevorzugten Weiterbildung ist vorgesehen, dass eine Mehrzahl von Düsen ringförmig um oder an der Spindel angeordnet sind und mit ihrer Ausströmungsrichtung auf den Ablenkkörper zuweisen. Somit kann der Ablenkkörper in vorteilhafter Weise durch die ringförmig um diesen herum angeordneten Düsen entlang seinem Umfang gleichmäßig mit Reinigungsflüssigkeit beaufschlagt werden.

Gemäß einer weiteren bevorzugten Weiterbildung ist vorgesehen, dass die Spindel mit einem Spindelmotor drehfest verbunden ist, der in einem Spindelgehäuse aufgenommen ist, welches insbesondere im Wesentlichen kegelstumpfförmig ist, wobei die Düsen an der Stirnfläche des Spindelgehäuses ausgebildet sind. Aufgrund der Anordnung des Spindelmotors im Spindelgehäuse kann vorzugsweise eine kompakte Anordnung einer Spindeleinheit bestehend aus Spindel, Spindelmotor und Spindelgehäuse vorgesehen werden. Die kegelstumpfförmige Ausbildung des Spindelgehäuses ermöglicht in vorteilhafter Weise eine verbesserte Zugänglichkeit der Spindel durch einen Arbeitsarm der Werkzeugmaschine.

Gemäß einer weiteren bevorzugten Weiterbildung ist vorgesehen, dass der Ablenkkörper Rillen aufweist, die sich im Wesentlichen parallel zur Drehachse der Spindel erstrecken, und wobei der Ablenkkörper mindestens eine Prallfläche aufweist, deren Normale sich im Wesentlichen in Austrittsrichtung der Düsen erstreckt, wobei die Prallfläche insbesondere auf auftreffende Strahlen der Reinigungsflüssigkeit zerstäubend wirkt. Aufgrund der im Wesentlichen senkrechten Anordnung der Prallfläche des Ablenkkörpers kann vorzugsweise gewährleistet werden, dass die den Ablenkkörper beaufschlagende Reinigungsflüssigkeit bei Auftreffen auf die Prallfläche im Wesentlichen seitlich und abwärts in Richtung der Spindel sowie des Gehäuses der Spindel reflektiert wird, wodurch ein Bereich von Seitenwänden, Bodenflächen, der Spindel und des Spindelgehäuses durch die an der Prallfläche zerstäubte Reinigungsflüssigkeit reinigbar sind.

Gemäß einer weiteren bevorzugten Weiterbildung ist vorgesehen, dass die Prallfläche am Ende, insbesondere am oberen Ende, des Ablenkkörpers ausgebildet ist und bei nach oben gerichteten Sprühstrahlen der Reinigungsflüssigkeit nach unten weist. Somit kann in vorteilhafter Weise eine Ablenkung bzw. Umlenkung der Sprühstrahlen der Reinigungsflüssigkeit nach unten gewährleistet werden.

Gemäß einer weiteren bevorzugten Weiterbildung ist vorgesehen, dass die Werkzeugmaschine eine Steuerung für ihre Reinigung aufweist, welche Steuerung bei Bestückung der Spindel mit dem Ablenkkörper einen Reinigungsvorgang einschaltet, in welchem die Düsen Reinigungsflüssigkeit zum Ablenkkörper hin ausströmen lassen und in welchem der Spindelmotor für das Drehen der Spindel mindestens teilweise eingeschaltet ist. Somit ist je nachdem, ob die Bestückung der Spindel mit dem Ablenkkörper manuell oder automatisch erfolgt, eine teilautomatische oder vollautomatische Initiierung eines Reinigungsvorgangs möglich.

Gemäß einer weiteren bevorzugten Weiterbildung ist vorgesehen, dass der Ablenkkörper einen Schaft aufweist, der in die Spindel einspannbar ist. Somit ist der Ablenkkörper vorzugsweise derart ausgebildet, dass dieser in bestehende Spindelgeometrien einspannbar ist, d.h., dass der Schaft des Ablenkkörpers derart ausgebildet ist, dass dieser von einem Aufnahmefutter der Spindel in die Spindel einspannbar ist.

Gemäß einer weiteren bevorzugten Weiterbildung ist vorgesehen, dass die Werkzeugmaschine einen Arbeitsarm-Ablenkkörper aufweist, der eine Prallfläche hat, die von dem Arbeitsarm vor die Düsen der Spindel verbringbar ist, welcher Arbeitsarm-Ablenkkörper insbesondere hinsichtlich seiner Höhenlage vor den Düsen verfahrbar ist. Somit weist die Werkzeugmaschine vorzugsweise zusätzlich zu dem Ablenkkörper einen weiteren Arbeitsarm-Ablenkkörper auf, der aufgrund seiner Verfahrbarkeit mittels des Arbeitsarms derart vor den Düsen der Spindel anordbar ist, dass eine erweiterte Verteilbarkeit bzw. Ablenkbarkeit der auf den Arbeitsarm-Ablenkkörper auftreffenden Reinigungsflüssigkeit bereitstellbar ist.

Gemäß einer weiteren bevorzugten Weiterbildung ist vorgesehen, dass der Arbeitsarm-Ablenkkörper um den Spindel-Ablenkkörper der Spindel passt und sich in der Arbeitsstellung mindestens teilweise um den Spindel-Ablenkkörper erstreckt. Aufgrund der Ausbildung des Arbeitsarm-Ablenkkörpers derart, dass dessen Form zumindest abschnittsweise einer Negativform des Spindel-Ablenkkörpers entspricht, kann der Arbeitsarm-Ablenkkörper entlang zu bestimmenden Arbeitspunkten entlang einer Längsachse des Spindel-Ablenkkörpers angeordnet werden.

Gemäß einer weiteren bevorzugten Weiterbildung ist vorgesehen, dass der Arbeitsarm-Ablenkkörper hinsichtlich seiner Neigung über den Arbeitsarm verstellbar ist und über diese unterschiedliche Bodenbereiche eines Fräsraums der Fräsmaschine mit reflektierten Reinigungsstrahlen beaufschlagt. Durch Verstellung der Neigung des Arbeitsarm-Ablenkkörpers ist somit in vorteilhafter Weise eine Abstrahl- bzw. Ablenkcharakteristik der den Arbeitsarm-Ablenkkörper beaufschlagenden Reinigungsstrahlen an eine jeweilige Geometrie des Fräsraums der Fräsmaschine anpassbar.

Gemäß einer weiteren bevorzugten Weiterbildung ist vorgesehen, dass der Arbeitsarm-Ablenkkörper einen abgewinkelten Schaft aufweist, der in einem Spannfutter des Arbeitsarms aufnehmbar ist. Somit kann der Schaft des Arbeitsarm-Ablenkkörpers in ein bestehendes Spannfutter des Arbeitsarms der Werkzeugmaschine aufgenommen werden.

Gemäß einer weiteren bevorzugten Weiterbildung ist vorgesehen, dass an dem Spindel-Ablenkkörper und/oder dem Arbeitsarm-Ablenkkörper Prallflächen dergestalt ausgebildet sind, dass reflektierte Reinigungsstrahlen beliebige Bereiche eines Fräsraums der als Fräsmaschine oder Drehfräsmaschine ausgebildeten Werkzeugmaschine beaufschlagen können. Somit kann eine an den Fräsraum der Werkzeugmaschine angepasste Abstrahlcharakteristik eingestellt werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung eines an einer Spindel einer Werkzeugmaschine angebrachten Ablenkkörpers gemäß einer bevorzugten Ausführungsform der Erfindung;
- Fig. 2: eine schematische Darstellung der Werkzeugmaschine mit der darin angeordneten Spindel und einem Arbeitsarm gemäß der bevorzugten Ausführungsform der Erfindung;
- Fig. 3: eine schematische Darstellung eines Spindel-Ablenkkörpers und eines Aufnahmearm-Ablenkkörpers im jeweils montierten Zustand gemäß der bevorzugten Ausführungsform der Erfindung;
- Fig. 4: eine Seitenansicht des Arbeitsarm-Ablenkkörpers gemäß der bevorzugten Ausführungsform der Erfindung;
- Fig. 5: eine schematische Darstellung einer sich um den Spindel-Ablenkkörper erstreckenden Prallfläche des Arbeitsarm-Ablenkkörpers gemäß der bevorzugten Ausführungsform der Erfindung; und
- Fig. 6: ein Ablaufdiagramm eines Verfahrens zum Betreiben der Werkzeugmaschine gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

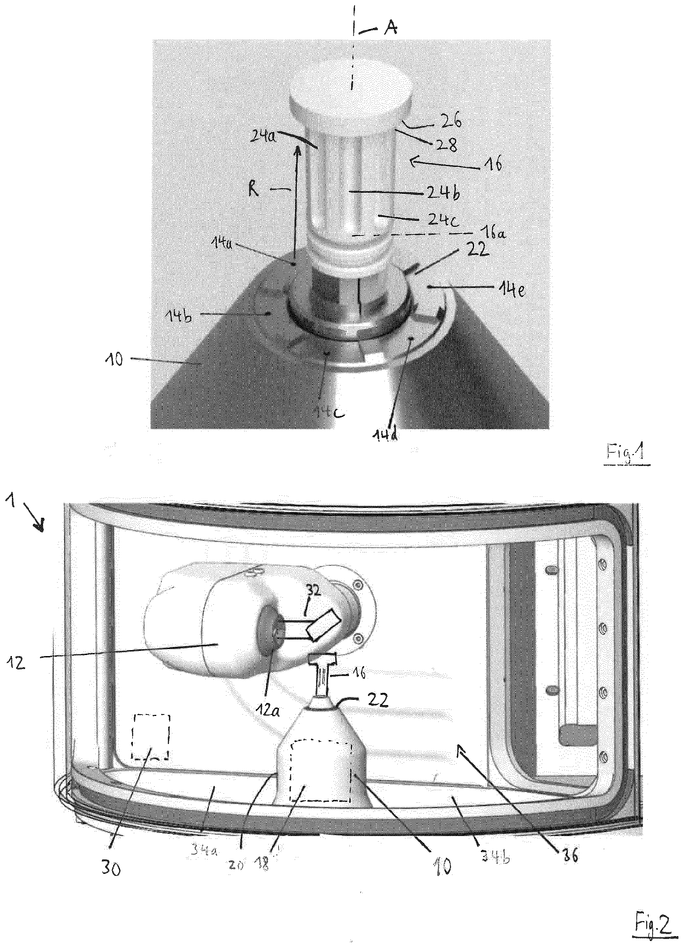

Fig. 1 zeigt eine schematische Darstellung eines an einer Spindel einer Werkzeugmaschine angebrachten Ablenkkörpers gemäß einer bevorzugten Ausführungsform der Erfindung.

Die Werkzeugmaschine 1 ist vorzugsweise durch eine dentale Fräsmaschine ausgebildet. Alternativ kann die Werkzeugmaschine 1 beispielsweise durch eine Drehfräsmaschine ausgebildet sein. Die Werkzeugmaschine 1 weist eine Spindel 10 auf. Die Spindel 10 ist zur Aufnahme eines Werkzeugs ausgebildet. Des Weiteren weist die Werkzeugmaschine 1 einen Arbeitsarm 12 auf. Der Arbeitsarm 12 ist zur Aufnahme eines Werkstücks ausgebildet.

Des Weiteren weist die Werkzeugmaschine 1 eine Mehrzahl von Düsen 14a, 14b, 14c, 14d, 14e sowie vorzugsweise eine weitere, (nicht in Fig. 1 dargestellte), da durch einen Ablenkkörper der Spindel verdeckte, Düse auf. Die Mehrzahl von Düsen 14a, 14b, 14c, 14d, 14e sind an der Spindel 10 angebracht. Ihre Austrittsrichtung R ist im Wesentlichen parallel zur Drehachse A der Spindel 10. Der Ablenkkörper 16 ist an der Spindel angebracht und erstreckt sich vor den jeweiligen Düsen 14a-14e. Der Ablenkkörper 16 ist derart an die Spindel angebracht, dass dieser in diese eingespannt ist.

Ferner alternativ kann die Austrittsrichtung R der Düsen 14a-14e beispielsweise schräg aufeinander zuweisen und insbesondere zur Drehachse A der Spindel 10 hin weisen. Der Ablenkkörper 16 ist drehbar gelagert und ist dazu ausgebildet, aus den Düsen 14a-14e austretende Reinigungsflüssigkeit abzulenken. Der Ablenkkörper 16 wirkt hierbei als Deflektor. Bei seiner Drehung auf ihn auftreffende Reinigungsflüssigkeit wird somit zumindest teilweise in Richtung seiner Drehung abgelenkt.

Die Mehrzahl von Düsen 14a-14e ist vorzugsweise ringförmig um die Spindel 10 herum angeordnet. Alternativ können die Düsen 14a-14e in deren Anzahl variieren bzw. in einer anderen geeigneten Weise an der Spindel 10 relativ zum Ablenkkörper 16 angeordnet sein, wie beispielsweise einer dreieckigen, viereckigen, fünfeckigen oder sechseckigen Anordnung, wobei die Düsen an jeweiligen Eckpunkten der Mehrecke angeordnet sind. Die Spindel 10 ist mit einem Spindelmotor 18 drehfest verbunden. Der Spindelmotor 18 ist in einem Spindelgehäuse 20 aufgenommen. Das Spindelgehäuse 20 ist im Wesentlichen kegelstumpfförmig ausgebildet, wobei die Düsen 14a-14e an der Stirnfläche 22 des Spindelgehäuses 20 ausgebildet sind.

Der Ablenkkörper 16 weist um dessen Umfangsfläche herum verteilt Rillen 24a, 24b, 24c auf, die sich im Wesentlichen parallel zur Drehachse A der Spindel 10 erstrecken. Der Ablenkkörper 16 ist vorzugsweise im Wesentlichen zylindrisch ausgebildet. Alternativ kann der Ablenkkörper 16 beispielsweise eine eckige Geometrie aufweisen. Die Rillen 24a, 24b, 24c an der Oberfläche des Ablenkkörpers 16 weisen vorzugsweise eine halbzylindrische Form auf. Alternativ können die Rillen 24a, 24b, 24c eine andere geeignete Form bzw. Vertiefung in der Oberfläche des Ablenkkörpers 16 aufweisen.

Der Ablenkkörper 16 weist eine Prallfläche 26 auf, deren Normale sich im Wesentlichen in Austrittsrichtung R der Düsen 14a-14e erstreckt. Die Prallfläche 26 wirkt somit auf auftreffende Strahlen der Reinigungsflüssigkeit zerstäubend.

Die Prallfläche 26 ist vorzugsweise am Ende 28, insbesondere am oberen Ende des Ablenkkörpers 16, ausgebildet. Eine Abstrahlcharakteristik der Prallfläche 26 ist somit derart ausgerichtet, dass auf die Prallfläche 26 auftreffende Sprühstrahlen der Reinigungsflüssigkeit nach unten hin reflektiert werden.

Die Werkzeugmaschine 1 weist überdies eine Steuerung 30 für ihre Reinigung auf. Die Steuerung 30 ist bei Bestückung der Spindel 10 mit dem Ablenkkörper 16 teilautomatisch oder vollautomatisch aktivierbar. Beispielsweise kann die Bestückung der Spindel mit dem Ablenkkörper 16 teilautomatisch, d.h. manuell, erfolgen, oder durch einen geeigneten Greifmechanismus vollautomatisch auf der Spindel 10 angeordnet werden.

Bei dem Reinigungsvorgang lassen die Düsen 14a-14e Reinigungsflüssigkeit zum Ablenkkörper 16 hin ausströmen. Der Spindelmotor 18 wird bei dem Reinigungsvorgang durch die Steuerung 30 angesteuert, sodass sich die Spindel 10 beim Reinigungsvorgang dreht und der Ablenkkörper 16 durch Drehung bedingt Reinigungsflüssigkeit in die Arbeitskammer der Werkzeugmaschine 1 versprüht.

Der Ablenkkörper 16 weist überdies einen Schaft 16a auf, der in die Spindel einspannbar ist.

Fig. 2 zeigt eine schematische Darstellung der Werkzeugmaschine mit der darin angeordneten Spindel und einem Arbeitsarm gemäß der bevorzugten Ausführungsform der Erfindung. Der Arbeitsarm-Ablenkkörper ist in einem an dem Arbeitsarm 12 montierten Zustand gezeigt. Gleichfalls ist der Spindel-Ablenkkörper 16 in einem an der Spindel 10 montierten Zustand gezeigt. Der Arbeitsarm-Ablenkkörper 32 ist in einer Neutralstellung positioniert, in welchem dieser mit dem Spindel-Ablenkkörper 16 keinen Kontakt bildet bzw. nicht um diesen herum angeordnet ist. Der Arbeitsarm-Ablenkkörper ist durch Verfahren des Arbeitsarms 12 jederzeit in eine beliebige gewünschte Position relativ zu dem Spindel-Ablenkkörper 16 positionierbar.

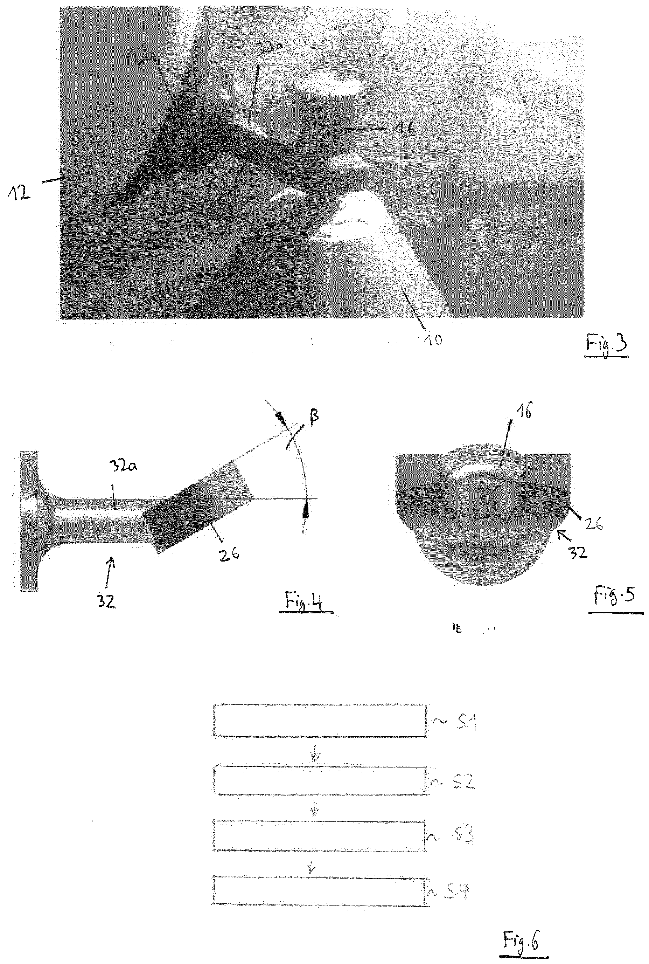

Fig. 3 zeigt eine schematische Darstellung eines Spindel-Ablenkkörpers und eines Aufnahmearm-Ablenkkörpers im jeweils montierten Zustand gemäß der bevorzugten Ausführungsform der Erfindung. In der in Fig. 3 gezeigten Darstellung ist der Arbeitsarm-Ablenkkörper 32 derart im Fräsraum der Werkzeugmaschine 1 positioniert, dass dessen Prallfläche sich um den Umfang des Spindel-Ablenkkörpers 16 herum erstreckt. In der in Fig. 3 gezeigten Anordnung des Arbeitsarm-Ablenkkörpers 32 relativ zum Spindel-Ablenkkörper 16 kann in vorteilhafter Weise die Abstrahlcharakteristik derart verändert werden, dass bevorzugt ein Bodenbereich des Fräsraums der Werkzeugmaschine 1 sowie eine Oberfläche der Spindel 10 durch die Reinigungsflüssigkeit beaufschlagt werden.

Der Arbeitsarm-Ablenkkörper 32 passt somit um den Spindel-Ablenkkörper 16 der Spindel 10 und erstreckt sich in der Arbeitsstellung teilweise um den Spindel-Ablenkkörper 16. Der Arbeitsarm-Ablenkkörper 32 ist hinsichtlich seiner Neigung β über den Arbeitsarm 12 verstellbar und über diese unterschiedliche Bodenbereiche eines Fräsraums der Fräsmaschine mit reflektierten Reinigungsstrahlen beaufschlagen kann. Der Arbeitsarm-Ablenkkörper 32 weist einen abgewinkelten Schaft 32a auf, der in einem Spannfutter 12a des Arbeitsarms 12 aufnehmbar ist.

An dem Spindel-Ablenkkörper 16 und dem Arbeitsarm-Ablenkkörper 32 sind die Prallflächen dergestalt ausgebildet, dass reflektierte Reinigungsstrahlen beliebige Bereiche des Fräsraums der Fräsmaschine beaufschlagen können.

Fig. 4 zeigt eine Seitenansicht des Arbeitsarm-Ablenkkörpers gemäß der bevorzugten Ausführungsform der Erfindung. Die Prallfläche 26 des Arbeitsarm-Ablenkkörpers 32 ist relativ zu einem Schaft des Arbeitsarm-Ablenkkörpers 32 in einem Winkel β geneigt bzw. angestellt. Der Neigungswinkel β beträgt vorzugsweise zwischen 20 und 40°, insbesondere vorzugsweise 30°. Aufgrund der geneigten Ausbildung der Prallfläche 26 des Arbeitsarm-Ablenkkörpers 32 kann die Prallfläche 26 bei Neigung des Arbeitsarms 12 der Werkzeugmaschine 1 im Wesentlichen senkrecht zu der Drehachse der Spindel 10 positioniert werden.

Die Werkzeugmaschine 1 weist den Arbeitsarm-Ablenkkörper 32 auf. Dieser weist die Prallfläche 26 auf, die vor dem Arbeitsarm 12 vor die (in Fig. 4 nicht gezeigten) Düsen der Spindel verbringbar ist. Der Arbeitsarm-Ablenkkörper 32 ist insbesondere hinsichtlich seiner Höhenlage vor den Düsen verfahrbar ausgebildet.

Fig. 5 zeigt eine schematische Darstellung einer sich um den Spindel-Ablenkkörper erstreckenden Prallfläche des Arbeitsarm-Ablenkkörpers gemäß der bevorzugten Ausführungsform der Erfindung. Die Prallfläche 26 des Arbeitsarm-Ablenkkörpers 32 ist in der vorliegenden Ausführungsform halbkreisförmig bzw. C-förmig ausgebildet. Diese Ausbildung der Prallfläche 26 des Arbeitsarm-Ablenkkörpers 32 ist somit optimal an die zylindrische Ausbildung des Spindel-Ablenkkörpers 16 anpassbar, sodass die Prallfläche 26 des Arbeitsarm-Ablenkkörpers 32 den Spindel-Ablenkkörper zumindest abschnittsweise umgreifen kann. Bei Verfahren des Arbeitsarms 12 kann die Prallfläche 26 des Arbeitsarm-Ablenkkörpers somit beispielsweise um 180° relativ zur Drehachse A der Spindel 10 verstellt bzw. repositioniert werden, sodass dadurch eine geänderte Abstrahlcharakteristik des Arbeitsarm-Ablenkkörpers 32 erzeugt werden kann.

Fig. 6 zeigt ein Ablaufdiagramm eines Verfahrens zum Betreiben der Werkzeugmaschine gemäß der bevorzugten Ausführungsform der Erfindung.

Das Verfahren umfasst ein Bereitstellen S1 einer Spindel für die Aufnahme eines Werkzeugs und eines Arbeitsarms für die Aufnahme eines Werkstücks. Das Verfahren umfasst des Weiteren ein Bereitstellen S2 mindestens einer Düse, die an der Spindel angebracht ist, insbesondere mit ihrer Austrittsrichtung im Wesentlichen parallel zur Drehachse der Spindel. Das Verfahren umfasst darüber hinaus ein Bereitstellen S3 eines Ablenkkörpers, welcher in die Spindel eingespannt ist, der sich mindestens teilweise vor der Düse erstreckt. Das Verfahren umfasst zusätzlich ein Beaufschlagen des Ablenkkörpers mit einem durch die mindestens eine Düse austretenden Fluid.

Beispielsweise können eine Form, Abmessung und/oder eine Beschaffenheit der Komponenten der Werkzeugmaschine abgeändert werden.

## Patentansprüche

1. Werkzeugmaschine (1), insbesondere dentale Fräsmaschine oder Drehfräsmaschine, mit einer Spindel (10) für die Aufnahme eines Werkzeugs und einem Arbeitsarm (12) für die Aufnahme eines Werkstücks und mit mindestens einer Düse (14a), die an der Spindel (10) angebracht ist, insbesondere mit ihrer Austrittsrichtung (R) im Wesentlichen parallel zur Drehachse (A) der Spindel (10), **dadurch gekennzeichnet, dass** ein Ablenkkörper (16) in die Spindel (10) eingespannt ist, der sich mindestens teilweise vor der Düse (14a) erstreckt.

2. Werkzeugmaschine nach Anspruch 1, **dadurch gekennzeichnet, dass** mindestens zwei Düsen (14a, 14b) an der Spindel (10) angebracht sind, deren Austrittsrichtung (R) schräg aufeinander zu weist und insbesondere zur Drehachse (A) der Spindel (10) hin weist.

3. Werkzeugmaschine nach einem der vorhergehenden Ansprüche, **dadurch gekennzeichnet, dass** der Ablenkkörper (16) drehbar gelagert ist und dass er aus den Düsen (14a, 14b) austretende Reinigungsflüssigkeit ablenkt, und wobei der Ablenkkörper (16) als Deflektor wirkt und bei seiner Drehung auf ihn auftreffende Reinigungsflüssigkeit insbesondere mindestens teilweise in Richtung seiner Drehung ablenkt.

4. Werkzeugmaschine nach einem der vorhergehenden Ansprüche, **dadurch gekennzeichnet, dass** eine Mehrzahl von Düsen (14a, 14b, 14c, 14d, 14e) ringförmig um oder an der Spindel (10) angeordnet sind und mit ihrer Ausströmungsrichtung auf den Ablenkkörper (16) zu weisen.

5. Werkzeugmaschine nach einem der vorhergehenden Ansprüche, **dadurch gekennzeichnet, dass** die Spindel (10) mit einem Spindelmotor (18) drehfest verbunden ist, der in einem Spindelgehäuse (20) aufgenommen ist, welches insbesondere im Wesentlichen kegelstumpfförmig ist, wobei die Düsen (14a, 14b) an der Stirnfläche (22) des Spindelgehäuses (20) ausgebildet sind.

6. Werkzeugmaschine nach einem der vorhergehenden Ansprüche, **dadurch gekennzeichnet, dass** der Ablenkkörper (16) Rillen (24a, 24b, 24c) aufweist, die sich im Wesentlichen parallel zur Drehachse (A) der Spindel (10) erstrecken, und wobei der Ablenkkörper (16) mindestens eine Prallfläche (26) aufweist, deren Normale sich im Wesentlichen in Austrittsrichtung (R) der Düsen (14a, 14b) erstreckt, wobei die Prallfläche (26) insbesondere auf auftreffende Strahlen der Reinigungsflüssigkeit zerstäubend wirkt.

7. Werkzeugmaschine nach Anspruch 6, **dadurch gekennzeichnet, dass** die Prallfläche (26) am Ende (28), insbesondere am oberen Ende, des Ablenkkörpers (16) ausgebildet ist und bei nach oben gerichteten Sprühstrahlen der Reinigungsflüssigkeit nach unten weist.

8. Werkzeugmaschine nach einem der vorhergehenden Ansprüche, **dadurch gekennzeichnet, dass** die Werkzeugmaschine (1) eine Steuerung (30) für ihre Reinigung aufweist, welche Steuerung (30) bei Bestückung der Spindel (10) mit dem Ablenkkörper (16) einen Reinigungsvorgang einschaltet, in welchem die Düsen (14a, 14b) Reinigungsflüssigkeit zum Ablenkkörper (16) hin ausströmen lassen und in welchem der Spindelmotor (18) für das Drehen der Spindel (10) mindestens teilweise eingeschaltet ist.

9. Werkzeugmaschine nach einem der vorhergehenden Ansprüche, **dadurch gekennzeichnet, dass** der Ablenkkörper (16) einen Schaft (16a) aufweist, der in die Spindel (10) einspannbar ist.

10. Werkzeugmaschine nach einem der vorhergehenden Ansprüche, **dadurch gekennzeichnet, dass** die Werkzeugmaschine (1) einen Arbeitsarm-Ablenkkörper (32) aufweist, der eine Prallfläche (26) hat, die von dem Arbeitsarm (12) vor die Düsen (14a, 14b) der Spindel (10) verbringbar ist, welcher Arbeitsarm-Ablenkkörper (32) insbesondere hinsichtlich seiner Höhenlage vor den Düsen (14a, 14b) verfahrbar ist.

11. Werkzeugmaschine nach Anspruch 10, **dadurch gekennzeichnet, dass** der Arbeitsarm-Ablenkkörper (32) um den Spindel-Ablenkkörper (16) der Spindel (10) passt und sich in der Arbeitsstellung mindestens teilweise um den Spindel-Ablenkkörper (16) erstreckt.

12. Werkzeugmaschine nach einem der Ansprüche 10 oder 11, **dadurch gekennzeichnet, dass** der Arbeitsarm-Ablenkkörper (32) hinsichtlich seiner Neigung (β) über den Arbeitsarm (12) verstellbar ist und über diese unterschiedliche Bodenbereiche (34a, 34b) eines Fräsraums (36) der Fräsmaschine mit reflektierten Reinigungsstrahlen beaufschlagt.

13. Werkzeugmaschine nach einem der Ansprüche 10 bis 12, **dadurch gekennzeichnet, dass** der Arbeitsarm-Ablenkkörper (32) einen abgewinkelten Schaft (32a) aufweist, der in einem Spannfutter (12a) des Arbeitsarms (12) aufnehmbar ist.

14. Werkzeugmaschine nach einem der vorhergehenden Ansprüche, **dadurch gekennzeichnet, dass** an dem Spindel-Ablenkkörper (16) und/oder dem Arbeitsarm-Ablenkkörper (32) Prallflächen dergestalt ausgebildet sind, dass reflektierte Reinigungsstrahlen beliebige Bereiche (34a, 34b) eines Fräsraums (36) der als Fräsmaschine oder Drehfräsmaschine ausgebildeten Werkzeugmaschine (1) beaufschlagen können.

15. Verfahren zum Betreiben einer Werkzeugmaschine (1), insbesondere einer dentalen Fräsmaschine oder Drehfräsmaschine, mit den Schritten:
Bereitstellen (S1) einer Spindel (10) für die Aufnahme eines Werkzeugs und eines Arbeitsarms (12) für die Aufnahme eines Werkstücks;
Bereitstellen (S2) mindestens einer Düse (14a), die an der Spindel (10) angebracht ist, insbesondere mit ihrer Austrittsrichtung (R) im Wesentlichen parallel zur Drehachse (A) der Spindel (10);
**gekennzeichnet durch**
Bereitstellen (S3) eines Ablenkkörpers (16), welcher in die Spindel (10) eingespannt ist, der sich mindestens teilweise vor der Düse (14a) erstreckt; und
Beaufschlagen (S4) des Ablenkkörpers (16) mit einem durch die mindestens eine Düse (14a) austretenden Fluids.

## Claims

1. A machine tool (1), especially a dental milling machine or rotary milling machine, having a spindle (10) for receiving a tool, and a working arm (12) for receiving a workpiece and having at least one nozzle (14a) which is attached to the spindle (10), especially with its exit direction (R) substantially parallel to the rotational axis (A) of the spindle (10), **characterized in that** a deflector (16) is clamped into the spindle (10), which especially extends at least partially in front of the nozzle (14a).

2. A machine tool according to claim 1, **characterized in that** at least two nozzles (14a, 14b) are attached to the spindle (10), the outlet direction (R) of which obliquely faces towards each other and especially faces towards the rotational axis (A) of the spindle (10).

3. The machine tool according to one of the preceding claims, **characterized in that** the deflector body (16) is rotatably mounted and that it deflects cleaning liquid emerging from the nozzles (14a, 14b), and wherein the deflector body (16) acts as a.deflector and, during rotation thereof, deflects cleaning liquid impinging thereon, especially at least partially in the direction of its rotation.

4. The machine tool according to one of the preceding claims, **characterized in that** a plurality of nozzles (14a, 14b, 14c, 14d, 14e) are arranged annularly around or on the spindle (10), and facing towards the deflector body (16)with their outflow direction.

5. The machine tool according to one of the preceding claims, **characterized in that** the spindle (10) is connected in a rotationally fixed manner to a spindle motor (18) which is accommodated in a spindle housing (20) which especially is substantially frustoconical, the nozzles (14a, 14b) being formed on the end face (22) of the spindle housing (20).

6. The machine tool according to one of the preceding claims, **characterized in that** the deflector body (16) comprises grooves (24a, 24b, 24c) extending substantially parallel to the rotational axis (A) of the spindle (10), and wherein the deflector body (16) comprises at least one baffle surface (26), the normal of which substantially extends in the outlet direction (R) of the nozzles (14a, 14b), the baffle surface (26) especially acting to atomize impinging jets of the cleaning liquid.

7. The machine tool according to claim 6, **characterized in that** the baffle surface (26) is formed at the end (28), especially at the upper end, of the deflector body (16) and facing downwards when the spray jets of the cleaning liquid are directed upwards.

8. The machine tool according to one of the preceding claims, **characterized in that** the machine tool (1) comprises a control (30) for cleaning thereof, which control (30), when the spindle (10) is provided with the deflector body (16), switches to a cleaning process in which the nozzles (14a, 14b) allow cleaning fluid to flow out towards the deflector body (16) and in which the spindle motor (18) for rotating the spindle (10) is at least partially turned on.

9. The machine tool according to one of the preceding claims, **characterized in that** the deflector body (16) has a shaft (16a) which can be clamped into the spindle (10).

10. The machine tool according to one of the preceding claims, **characterized in that** the machine tool (1) comprises a working arm deflector body (32) having a baffle surface (26) which can be brought in front of the nozzles (14a, 14b) of the spindle (10) by the working arm (12), which working arm deflector body (32) is displaceable especially with respect to its height position in front of the nozzles (14a, 14b).

11. The machine tool according to claim 10, **characterized in that** the working arm deflector body (32) fits around the spindle deflector (16) of the spindle (10) and, in the working position, at least partially extends around the spindle deflector (16).

12. The machine tool according to one of the claims 10 or 11, **characterized in that** the working arm deflector body(32) is adjustable across the working arm (12) with respect to its inclination (B), and via said inclination acting on different floor areas (34a, 34b) of a milling chamber (36) of the milling machine using reflected cleaning jets.

13. The machine tool according to one of claims 10 to 12, **characterized in that** the working arm deflector body (32) comprises an angled shaft (32a) which is receivable in a chuck (12a) of the working arm (12).

14. The machine tool according to one of the preceding claims, **characterized in that** baffle surfaces are formed on the spindle deflector body (16) and/or the working arm deflector body (32) such that reflected cleaning jets can be applied to any desired areas (34a, 34b) of a milling chamber (36) of the machine tool (1) designed as a milling machine or a rotary milling machine.

15. The method for operating a machine tool (1), especially a dental milling machine or a rotary milling machine, comprising the steps of:
providing (S1) a spindle (10) for receiving a tool, and a working arm (12) for receiving a workpiece;
providing (S2) at least one nozzle (14a) attached to the spindle (10), in particular with its exit direction (R) substantially parallel to the rotational axis(A) of the spindle (10);
**characterized by**
providing (S3) a deflector (16) clamped into the spindle (10) which extends at least partially in front of the nozzle (14a); and
applying (S4) a fluid exiting through the at least one nozzle (14a) to the deflector (16).

## Revendications

1. Machine-outil (1), en particulier fraiseuse dentaire ou fraiseuse rotative dentaire, avec une broche (10), pour recevoir un outil et un bras de travail (12), pour recevoir une pièce à usiner, et avec au moins une buse (14a), qui est montée sur la broche (10), dont en particulier la direction de sortie (R) est essentiellement parallèle à l'axe de rotation (A) de la broche (10), **caractérisée en ce qu'**un corps déflecteur (16) est serré dans la broche (10), qui s'étend en particulier au moins partiellement devant la buse (14a).

2. Machine-outil selon la revendication 1, **caractérisée en ce qu'**au moins deux buses (14a, 14b) sont montées sur la broche (10), dont la direction de sortie (R) s'incline l'une vers l'autre et en particulier vers l'axe de rotation (A) de la broche (10).

3. Machine-outil selon l'une des revendications précédentes, **caractérisée en ce que** le corps déflecteur (16) est monté de manière rotative et qu'il dévie le liquide de nettoyage sortant des buses (14a, 14b), et où le corps déflecteur (16) agit comme déflecteur et, au cours de sa rotation, dévie le liquide de nettoyage qui le touche, en particulier au moins partiellement dans le sens de sa rotation.

4. Machine-outil selon l'une des revendications précédentes, **caractérisée en ce qu'**une pluralité de buses (14a, 14b, 14c, 14d, 14e) sont disposées sous forme d'anneau autour ou sur la broche (10) et pointent avec leur direction de sortie vers le corps déflecteur (16).

5. Machine-outil selon l'une des revendications précédentes, **caractérisée en ce que** la broche (10) est reliée de manière immobilisée en rotation à un moteur de broche (18) qui est logé dans un carter de broche (20) qui est en particulier essentiellement tronconique, où les buses (14a, 14b) sont formées sur la face frontale (22) du carter de broche (20).

6. Machine-outil selon l'une des revendications précédentes, **caractérisée en ce que** le corps déflecteur (16) présente des rainures (24a, 24b, 24c) qui s'étendent essentiellement parallèles à l'axe de rotation (A) de la broche (10), et où le corps déflecteur (16) présente au moins une surface d'impact (26) dont la normale s'étend essentiellement dans la direction de sortie (R) des buses (14a, 14b), où la surface d'impact (26) agit en particulier en atomisant des jets du liquide de nettoyage lors de leur impact.

7. Machine-outil selon la revendication 6, **caractérisée en ce que** la surface d'impact (26) est formée à l'extrémité (28), en particulier à l'extrémité supérieure, du corps déflecteur (16) et est dirigée vers le bas lorsque les jets de pulvérisation du liquide de nettoyage sont dirigés vers le haut.

8. Machine-outil selon l'une des revendications précédentes, **caractérisée en ce que** la machine-outil (1) comprend une commande (30) pour son nettoyage, où ladite commande (30) déclenche un processus de nettoyage, lorsque la broche (10) est équipée du déflecteur (16), où les buses (14a, 14b) permettent au liquide de nettoyage de s'écouler vers le déflecteur (16) et où le moteur de broche (18) pour la rotation de la broche (10) est au moins partiellement mis en marche.

9. Machine outil selon l'une des revendications précédentes, **caractérisée en ce que** le corps déflecteur (16) présente une tige (16a) qui peut être serrée dans la broche (10).

10. Machine-outil selon l'une des revendications précédentes, **caractérisée en ce que** la machine-outil (1) comprend un corps déflecteur de bras de travail (32) ayant une surface d'impact (26) qui peut être amenée par le bras de travail (12) devant les buses (14a, 14b) de la broche (10), où ledit déflecteur de bras de travail (32) est mobile en particulier par rapport à sa position en hauteur devant les buses (14a, 14b).

11. Machine-outil selon la revendication 10, **caractérisée en ce que** le déflecteur de bras de travail (32) s'adapte autour du déflecteur de broche (16) de la broche (10) et s'étend en position de travail au moins partiellement autour du déflecteur de broche (16).

12. Machine-outil selon l'une des revendications 10 ou 11, **caractérisée en ce que** le déflecteur du bras de travail (32) est réglable en ce qui concerne son inclinaison (β) par le bras de travail (12) et agit par ce biais sur différentes surfaces de sol (34a, 34b) d'une chambre de fraisage (36) de la machine de fraisage avec des rayons de nettoyage réfléchis.

13. Machine-outil selon l'une des revendications 10 à 12, **caractérisée en ce que** le corps déflecteur du bras de travail (32) présente un arbre coudé (32a) qui peut être reçu dans un mandrin (12a) du bras de travail (12).

14. Machine-outil selon l'une des revendications précédentes, **caractérisée en ce que** des surfaces d'impact sont formées sur le corps déflecteur de broche (16) et/ou le corps déflecteur de bras de travail (32) de telle manière que des rayons de nettoyage réfléchis peuvent agir sur des zones quelconques (34a, 34b) d'une chambre de fraisage (36) de la machine-outil (1) conçue comme une fraiseuse ou une fraiseuse rotative.

15. Procédé d'opération d'une machine-outil, en particulier d'une fraiseuse dentaire ou d'une fraiseuse rotative dentaire, comprenant les étapes suivantes :
fourniture (S1) d'une broche (10) pour recevoir un outil et un bras de travail (12) pour recevoir une pièce à usiner ;
fourniture (S2) d'au moins une buse (14a), qui est fixée sur la broche (10), en particulier avec sa direction de sortie (R) sensiblement parallèle à l'axe de rotation (A) de la broche (10) ;
**caractérisé par** la fourniture (S3) d'un corps déflecteur (16) qui est serré dans la broche (10), qui s'étend au moins partiellement devant la buse (14a) ; et la mise sous pression (S4) du corps déflecteur (16) avec un fluide sortant par ladite au moins une buse (14a).
